(19) Europäisches Patentamt
European Patent Office
Office européen des brevets

(11) EP 3 119 865 B1

(12) # EUROPEAN PATENT SPECIFICATION

(45) Date of publication and mention of the grant of the patent:
**29.04.2020 Bulletin 2020/18**

(21) Application number: **15706736.4**

(22) Date of filing: **17.02.2015**

(51) Int Cl.:
***C11D 3/40*** *(2006.01)* ***C09B 29/08*** *(2006.01)*
***C09B 31/047*** *(2006.01)* ***C09B 31/08*** *(2006.01)*
***C09B 33/02*** *(2006.01)* ***C11D 3/42*** *(2006.01)*

(86) International application number:
**PCT/EP2015/053277**

(87) International publication number:
**WO 2015/139903 (24.09.2015 Gazette 2015/38)**

(54) **DOMESTIC METHOD OF TREATING A TEXTILE WITH AN AZO-DYE**

HAUSHALTSVERFAHREN ZUR BEHANDLUNG EINER TEXTILIE MIT EINEM AZOFARBSTOFF

PROCÉDÉ DOMESTIQUE DE TRAITEMENT D'UN TEXTILE AVEC UN COLORANT AZOÏQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2014 EP 14160211**

(43) Date of publication of application:
**25.01.2017 Bulletin 2017/04**

(73) Proprietors:
- **Unilever PLC**
  **London, Greater London EC4Y 0DY (GB)**
  Designated Contracting States:
  **CY GB IE MT**
- **Unilever NV**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen Norman**
  **Wirral**
  **Merseyside CH63 3JW (GB)**
- **BIRD, Jayne Michelle**
  **Wirral**
  **Merseyside CH63 3JW (GB)**

(74) Representative: **Brooijmans, Rob Josephina Wilhelmus**
**Unilever Patent Group**
**Bronland 14**
**6708 WH Wageningen (NL)**

(56) References cited:
**WO-A1-2007/087252**
**WO-A1-2008/087497**
**WO-A1-2008/091524**
**WO-A1-2011/134685**
**WO-A2-2010/151906**
**WO-A2-2013/006871**
**GB-A- 2 099 009**
**US-A- 4 321 055**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of Invention

The present invention concerns a method of treating a textile with an aqueous solution of a blue or violet dye.

### Background of Invention

To enhance the whiteness of textiles during domestic laundering, blue or violet shading dyes are used to counteract yellowing of textiles.

WO2006/045375 (Unilever) discloses azo dyes for the shading of textiles during domestic laundering.

WO2012/166768 (Procter & Gamble) and WO2013/006871 (Milliken) discloses azo dyes modified with long alkyl chains to improve performance.

There is a need to improve the performance of azo dyes modified with long alkyl chains.

### Summary of the Invention

The present invention provides a domestic method of treating a textile, the method comprising the steps of:

(i) treating a textile with an aqueous solution of the blue or violet mono-azo dye, the aqueous solution comprising from 1 ppb to 5000 ppm, preferably 10ppb to 1ppm, most preferably 50ppb to 300ppb, of blue or violet azo-dye; and, from 0.2 g/L to 5 g/L, preferably from 0.2 to 4 g/L, of a surfactant, most preferably from 0.4 to 0.8g/L; and,
(ii) optionally rinsing and drying the textile, wherein the blue or violet mono-azo dye is of the form:

Dye-$NR_1R_2$
wherein, R1 is a $-(L)_n-(X)_p-CH_2-CH(OH)CH_2(O)_qR_3$ group, wherein n = p = 0 or 1, q = 0 or 1, and L is selected from C1 to C2-alkyl, and ether group having from 1 to 15 ether linkages;
when n = 1, X is selected from: N and O;
$R_3$ is a C5 to C11-n-alkyl chain; and,
$R_2$ is selected from: H; C1 to C3-alkyl; phenyl; benzyl; and a $-(L)_n-(X)_p-CH_2-CH(OH)CH_2(O)_qR_3$ group, wherein n = p = 0 or 1, q = 0 or 1, and L is selected from C1 to C2-alkyl, and an ether group having from 1 to 15 ether linkages.

Preferably, the aqueous solution comprises a fluorescer in the range from 0.0001 g/l to 0.1 g/l.

### Detailed Description of the Invention

$R_3$ is a C5 to C11-n-alkyl chain. Preferably q = 0. The azo dye is a mono-azo dye.

X is a N or O and preferably an O.

When L is an ether group, the ether group has preferably from 1 to 10 ether linkages, more preferably from 1 to 3 ether linkages.

In one aspect the blue or violet azo dye is not substituted by a group selected from: quaternary ammonium groups, $SO_3H$ and COOH.

Azo dyes and azo dye synthesis is discussed in Color Chemistry (H. Zollinger, Wiley VCH 2003) and Industrial Dyes (K.Hunger Wiley VCH 2003).

The azo chromophore may be selected from a wide class of azo chromophores of the direct blue and violet, acid blue and violet, and disperse blue and violet dyes as listed in the colour Index (Society of Dyers and Colourists/American Association of Textile Chemists and Colorists).

The blue or violet azo dye may carry, for example, sulphonate, carboxylic acid groups and quaternary ammonium groups.

The blue or violet azo dye may be synthesised via the reaction of a 1,2 epoxy alkyl compound with a primary aromatic amine, following by azo coupling to form the azo dye. For example:

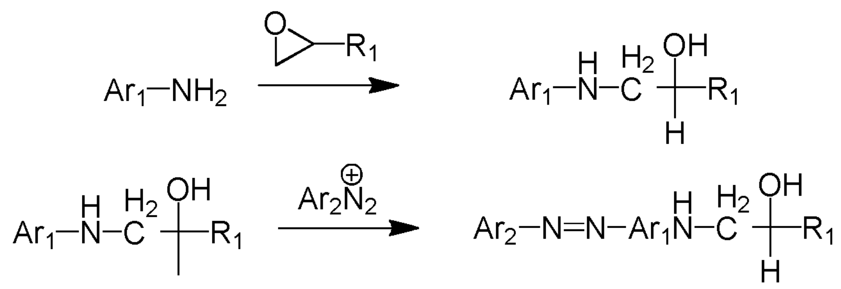

Where $Ar_1$ and $Ar_2$ are aromatic rings.

Further examples of the first step in the synthesis are:

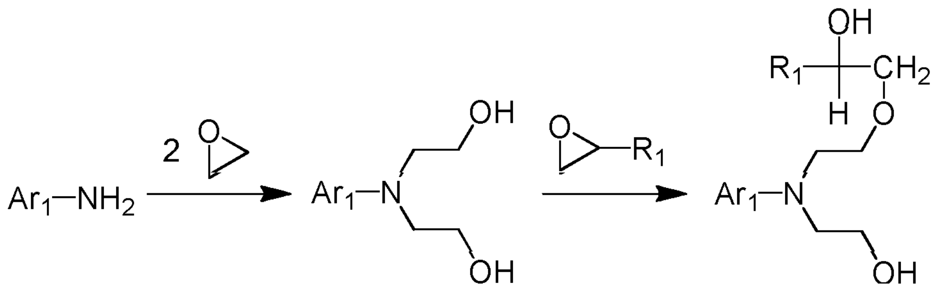

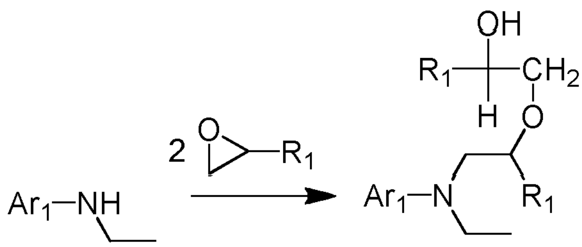

Example of dyes :

| | |
|---|---|
| 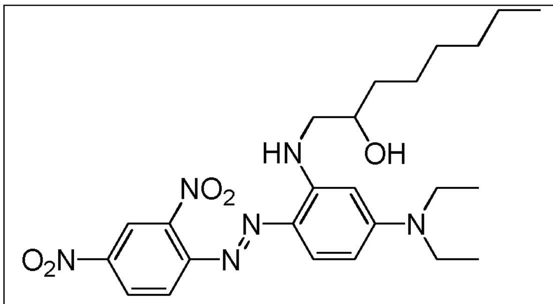 | 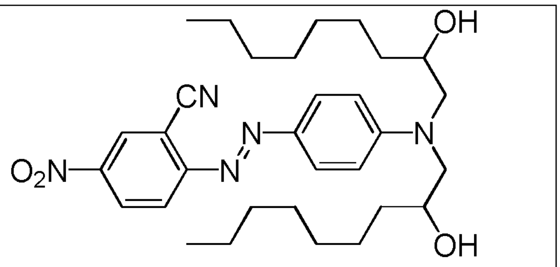 |
| 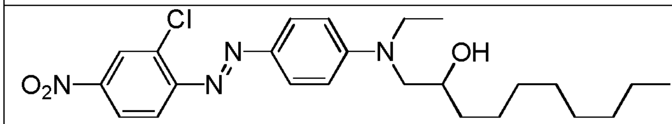 | 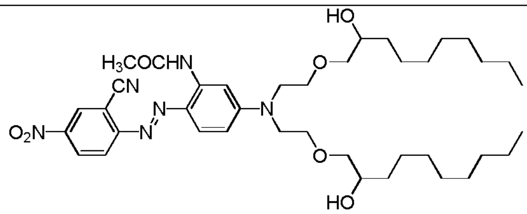 |
| 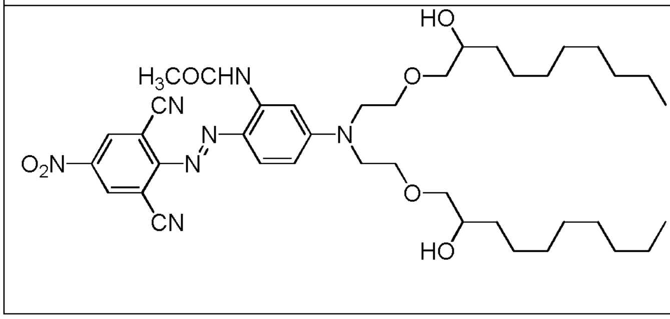 | 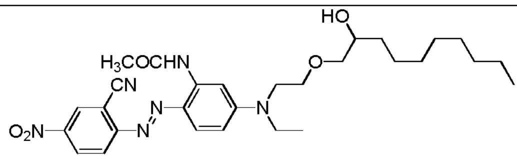 |

| | |
|---|---|
| 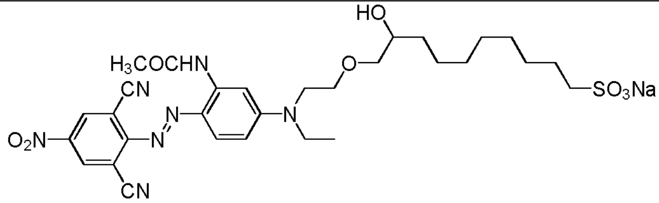 | 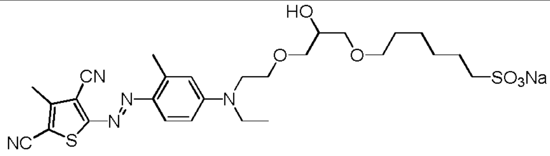 |
| 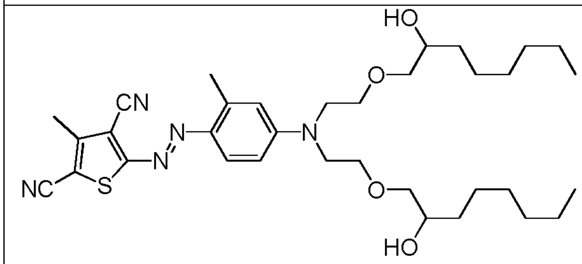 | 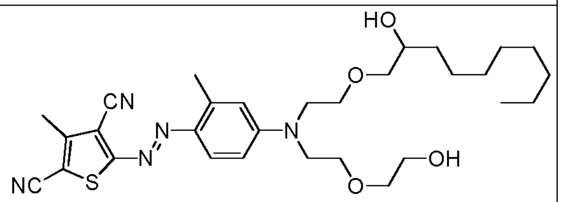 |
| 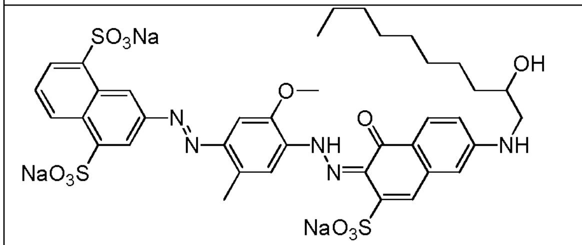 | 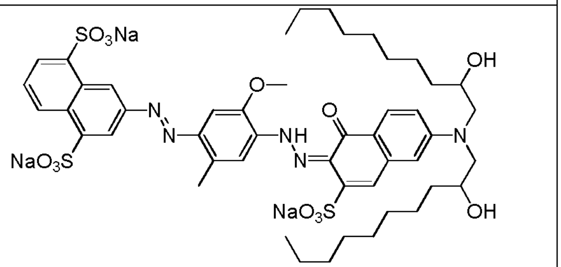 |
| 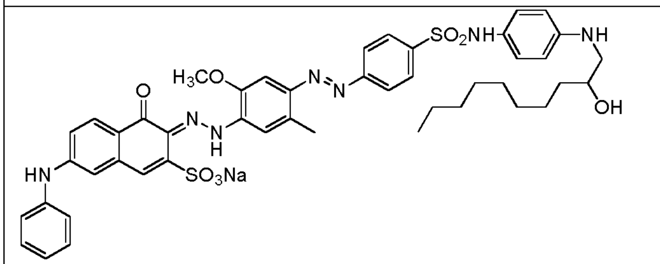 | 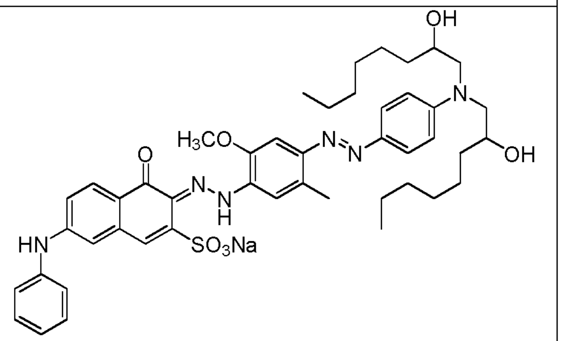 |
| 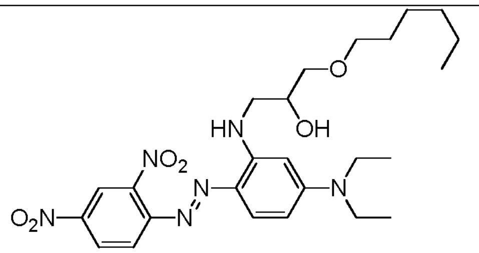 | 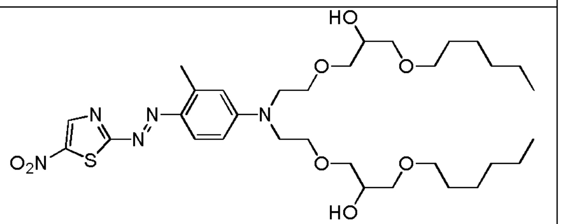 |
| 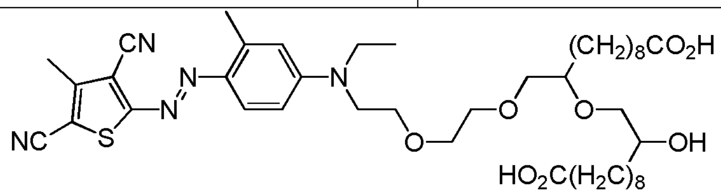 | |

Other Dyes

In a preferred embodiment of the invention, other shading colourants may be present. They are preferably selected from hydrophobic dyes more preferably solvent and disperse dyes such as solvent violet 13, disperse violet 27, disperse violet 28 and alkoxylated thiophene dyes.

A hydrophobic dye is uncharged pH = 7.

Even more preferred is the presence of acid azine dyes as described in WO 2008/017570; the level of the acid azine dyes should be in the range from 0.0001 to 0.1 wt%. Preferred acid azine dyes are acid violet 50, acid blue 59, dye with CAS-No 72749-80-5, and acid blue 98. Blue and Violet cationic phenazine dyes may also be present as discussed in WO2009/141172 and WO2009/141173.

Photobleaches such as sulphonated Zn/Al phthalocyanins may be present.

Surfactant

A laundry composition may comprise between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

Cationic Compound

A fabric conditioner may contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

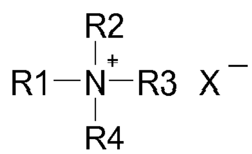

in which $R^1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

Other suitable quaternary ammonium compounds are disclosed in EP 0 239 910 (Procter and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

Builders or Complexing Agents

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

## Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

## Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

## Enzymes

One or more enzymes are preferred present when practicing a method of the invention.

Preferably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens*, *Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase, classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus*, e.g. a special strain of *B. licheniformis*, described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus*, *Pseudomonas*, *Humicola*, *Fusarium*, *Thielavia*, *Acremonium*, e.g. the fungal cellulases produced from *Humicola insolens*, *Thielavia terrestris*, *Myceliophthora thermophila*, and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Endolase™, Renozyme™, Celluclean™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus*, e.g. from *C. cinereus*, and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

Dye weights refer to the sodium or chloride salts unless otherwise stated.

Preferably the laundry treatment composition is in a plastic bag, plastic box or a cardboard box.

For ease of use it is preferred that the laundry treatment composition is present in 0.5 to 5kg packs.

## Examples

Reference dye A may be synthesised according to the methods described in WO2013/006871.

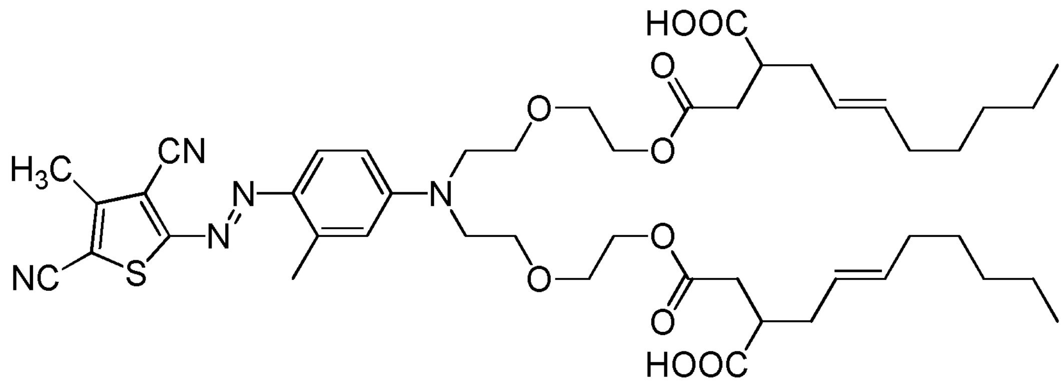

Reference Dye A

Molecular weight = 878

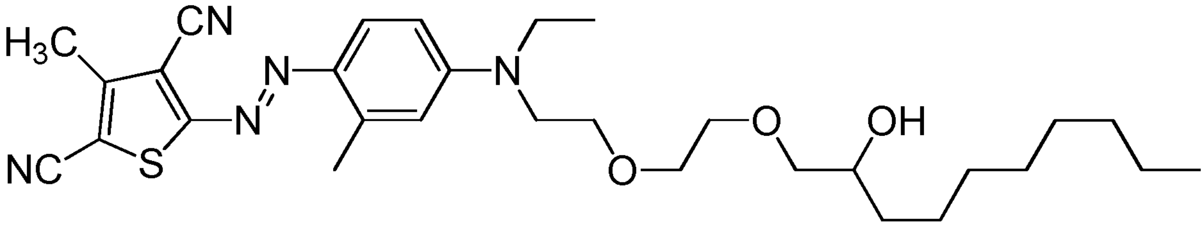

Dye 1

Molecular weight = 554

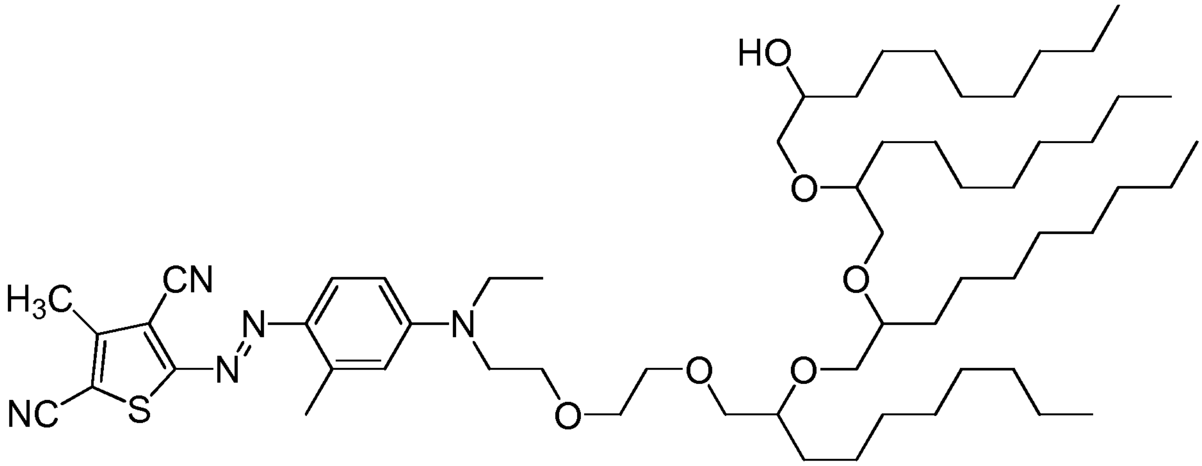

Dye 2

Molecular weight = 1023

Dyes 1 and 2 were synthesised by the reaction of N-Ethyl-N-hydroxyethoxyethyl-m-toluidine with 1,2-epoxydecane, followed by azo coupling.

To synthesise Dye 1: the reaction was performed with 1.1 mol equivalent of 1,2-epoxydecane in acetic acid at 363K. The initial product was the acetate ester, which was then hydrolysed using LiOH. Reaction products were confirmed by MS.

To synthesise Dye 2: the reaction was performed 1,2-epoxydecane in refluxing tetrahydrofuran and KO*t*Bu. Reaction products were confirmed by MS.

0.02wt% of the pure dye was dissolved in an aqueous liquid detergent containing 10wt% linear alkyl benzene sulfonate and 10wt% non-ionic surfactant (Neodol 25-9 (Shell chemicals) a primary alcohol ethoxylate with an average of approximately 9 moles of ethylene oxide per mole of alcohol. The alcohol is a blend of C12, C13, C14 and C15 primary alcohols.). The remainder of the liquid detergent was water. 4g/L of the liquid detergent was added to a plastic bottle containing demineralised water and a piece of woven cotton a fabric and a piece of knitted polyester fabric at 293K. The Liquor to cloth ratio was 100:1 and the pH of the wash liquor was buffered to pH=7. The bottle was agitated on an orbital shaker at 150 rpm for 30 minutes, the clothes removed, rinsed in water and dried. The colour of the cloth was measured using a reflectometer and expressed as the CIE L*a*b* values. The colour deposition of the blue-violet dyes to the cloth was quantified as $\Delta b$, where:

$$\Delta b = b\text{ (control, wash without dye)} - b\text{(wash with dye)}$$

The experiment was repeated at pH=8, 9 and 10. The results are given in the table below.

| pH | Δb (colour deposition) | | | | | |
|---|---|---|---|---|---|---|
| | cotton | | | polyester | | |
| | Reference A | Dye 1 | Dye 2 | Reference A | Dye 1 | Dye 2 |
| 7 | 0.26 | 1.74 | 0.58 | 1.97 | 4.18 | 3.50 |
| 8 | 0.23 | 1.84 | 0.48 | 1.13 | 4.17 | 3.62 |
| 9 | 0.20 | 1.57 | 0.46 | 1.03 | 3.85 | 3.77 |
| 10 | 0.33 | 1.73 | 0.27 | 0.97 | 4.00 | 3.81 |

Dye 1 and Dye 2 give much higher colour deposition (Δb) to both cotton and polyester than the reference dye, reference A. On polyester a strong pH dependence is observed for Reference A, this is not observed for Dye 1 and Dye 2.

## Claims

**1.** A domestic method of treating a textile, the method comprising the steps of:

(i) treating a textile with an aqueous solution of a blue or violet mono-azo dye, the aqueous solution comprising from 1 ppb to 5000 ppm of blue or violet azo dye; and, from 0.2 g/L to 5 g/L of a surfactant; and,
(ii) optionally rinsing and drying the textile, wherein the blue or violet mono-azo dye is of the form:

$$\text{Dye-NR}_1\text{R}_2,$$

wherein,

$R_1$ is a $-(L)_n-(X)_p-CH_2-CH(OH)CH_2(O)_qR_3$ group, wherein n = p = 0 or 1, q = 0 or 1, and L is selected from C1 to C2-alkyl, and ether group having from 1 to 15 ether linkages;
when n = 1, X is selected from: N and O;
$R_3$ is a C5 to C11-n-alkyl chain; and,
$R_2$ is selected from: H; $C_1$ to $C_3$-alkyl; phenyl; benzyl; and a $-(L)_n-(X)_p-CH_2-CH(OH)CH_2(O)_qR_3$ group, wherein n = p = 0 or 1, q = 0 or 1, and L is selected from C1 to C2-alkyl, and an ether group having from 1 to 15 ether linkages.

**2.** A domestic method of treating a textile according to claim 1, wherein q = 0.

**3.** A domestic method of treating a textile according to any preceding claim, wherein X is O.

**4.** A domestic method of treating a textile according to any preceding claim, wherein the ether group has from 1 to 10 ether linkages.

**5.** A domestic method of treating a textile according to claim 4, wherein the ether group has from 1 to 3 ether linkages.

**6.** A domestic method of treating a textile according to any one of claims 1 to 5, wherein the blue or violet azo dye is not substituted by a group selected from: quaternary ammonium groups, $SO_3H$ and COOH.

**7.** A domestic method of treating a textile according to any preceding claim, wherein the blue or violet mono-azo dye is an azothiophene.

**8.** A domestic method of treating a textile according to any preceding claim, wherein the aqueous solution comprises from 0.2 to 4 g/L of a surfactant.

**9.** A domestic method of treating a textile according to any preceding claim, wherein the aqueous solution comprises a fluorescer in the range from 0.0001 g/l to 0.1 g/l.

## Patentansprüche

1. Häusliches Verfahren zur Behandlung eines Textils, wobei das Verfahren die Schritte umfasst:

   (i) Behandeln eines Textils mit einer wässrigen Lösung eines blauen oder violetten Monoazofarbstoffs, wobei die wässrige Lösung von 1 ppb bis 5000 ppm blauen oder violetten Azofarbstoff und von 0,2 g/l bis 5 g/l eines Tensids umfasst; und
   (ii) optional Spülen und Trocknen des Textils, wobei der blaue oder violette Monoazofarbstoff in Form von

   Farbstoff-$NR_1R_2$

   vorliegt,
   worin

   $R^1$ eine $-(L)_n-(X)_p-CH_2-CH(OH)CH_2(O)_qR_3$-Gruppe darstellt, worin n = p = 0 oder 1 ist, q = 0 oder 1 ist und L ausgewählt ist unter $C_1$- bis $C_2$-Alkyl und einer Ethergruppe mit 1 bis 15 Etherbindungen;
   wenn n = 1, X ausgewählt ist unter N und O;
   $R_3$ eine $C_5$- bis $C_{11}$-n-Alkylkette ist; und
   $R_2$ ausgewählt ist unter H, $C_1$- bis $C_3$-Alkyl, Phenyl, Benzyl; und einer $-(L)_n-(X)_p-CH_2-CH(OH)CH_2(O)_qR_3$-Gruppe, worin n = p = 0 oder 1 ist, q = 0 oder 1 ist; und L ausgewählt ist unter $C_1$- bis $C_2$-Alkyl, und einer Ethergruppe mit 1 bis 15 Etherbindungen.

2. Häusliches Verfahren zur Behandlung eines Textils nach Anspruch 1, wobei q = 0 ist.

3. Häusliches Verfahren zur Behandlung eines Textils nach einem vorhergehenden Anspruch, wobei X O ist.

4. Häusliches Verfahren zur Behandlung eines Textils nach einem vorhergehenden Anspruch, wobei die Ethergruppe von 1 bis 10 Etherbindungen aufweist.

5. Häusliches Verfahren zur Behandlung eines Textils nach Anspruch 4, wobei die Ethergruppe von 1 bis 3 Etherbindungen aufweist.

6. Häusliches Verfahren zur Behandlung eines Textils nach irgendeinem der Ansprüche 1 bis 5, wobei der blaue oder violette Azofarbstoff nicht mit einer Gruppe substituiert ist, ausgewählt unter quaternären Ammoniumgruppen, $SO_3H$ und COOH.

7. Häusliches Verfahren zur Behandlung eines Textils nach einem vorhergehenden Anspruch, wobei der blaue oder violette Monoazofarbstoff ein Azothiophen ist.

8. Häusliches Verfahren zur Behandlung eines Textils nach einem vorhergehenden Anspruch, wobei die wässrige Lösung von 0,2 bis 4 g/l eines Tensids umfasst.

9. Häusliches Verfahren zur Behandlung eines Textils nach einem vorhergehenden Anspruch, wobei die wässrige Lösung ein Fluoreszenzmittel in dem Bereich von 0,0001 g/l bis 0,1 g/l umfasst.

## Revendications

1. Procédé domestique de traitement d'un textile, le procédé comprenant les étapes de :

   (i) traitement d'un textile avec une solution aqueuse d'un colorant mono-azo bleu ou violet, la solution aqueuse comprenant de 1 ppb à 5 000 ppm de colorant azo bleu ou violet ; et, de 0,2 g/L à 5 g/L d'un tensioactif ; et,
   (ii) éventuellement rinçage et séchage du textile, où le colorant mono-azo bleu ou violet est de la forme :

   colorant-$NR_1R_2$,

   où,

$R_1$ est un groupe $-(L)_n-(X)_p-CH_2-CH(OH)CH_2(O)_qR_3$, où n = p = 0 ou 1, q = 0 ou 1, et L est choisi parmi un groupe alkyle en C1 à C2, et un groupe éther présentant de 1 à 15 liaisons éther ;
lorsque n = 1, X est choisi parmi : N et O ;
$R_3$ est une chaîne n-alkyle en C5 à C11 ; et,
$R_2$ est choisi parmi : H ; alkyle en $C_1$ à $C_3$ ; phényle ; benzyle ; et un groupe $-(L)_n-(X)_p-CH_2-CH(OH)CH_2(O)_qR_3$, où n = p = 0 ou 1, q = 0 ou 1, et L est choisi parmi un groupe alkyle en C1 à C2, et un groupe éther présentant de 1 à 15 liaisons éther.

**2.** Procédé domestique de traitement d'un textile selon la revendication 1, où q = 0.

**3.** Procédé domestique de traitement d'un textile selon l'une quelconque des revendications précédentes, où X est O.

**4.** Procédé domestique de traitement d'un textile selon l'une quelconque des revendications précédentes, où le groupe éther présente de 1 à 10 liaisons éther.

**5.** Procédé domestique de traitement d'un textile selon la revendication 4, où le groupe éther présente de 1 à 3 liaisons éther.

**6.** Procédé domestique de traitement d'un textile selon l'une quelconque des revendications 1 à 5, où le colorant azo bleu ou violet n'est pas substitué par un groupe choisi parmi : des groupes ammonium quaternaire, $SO_3H$ et COOH.

**7.** Procédé domestique de traitement d'un textile selon l'une quelconque des revendications précédentes, où le colorant mono-azo bleu ou violet est un azothiophène.

**8.** Procédé domestique de traitement d'un textile selon l'une quelconque des revendications précédentes, où la solution aqueuse comprend de 0,2 à 4 g/L d'un tensioactif.

**9.** Procédé domestique de traitement d'un textile selon l'une quelconque des revendications précédentes, où la solution aqueuse comprend un agent fluorescent dans l'intervalle de 0,0001 g/l à 0,1 g/l.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006045375 A
- WO 2012166768 A
- WO 2013006871 A
- WO 2008017570 A
- WO 2009141172 A
- WO 2009141173 A
- EP 328177 A, Unilever
- EP 070074 A
- EP 346995 A, Unilever
- EP 0239910 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009107091 A
- WO 2009111258 A
- WO 2009148983 A
- WO 9219709 A
- WO 9219708 A


### Non-patent literature cited in the description


- **H. ZOLLINGER.** Color Chemistry. Wiley VCH, 2003
- **K.HUNGER.** Industrial Dyes. Wiley VCH, 2003
- *CHEMICAL ABSTRACTS,* 72749-80-5
- **SCHWARTZ ; PERRY.** Surface Active Agents. Interscience, 1949, vol. 1
- **SCHWARTZ, PERRY ; BERCH.** SURFACE ACTIVE AGENTS. Interscience, 1958, vol. 2
- McCutcheon's Emulsifiers and Detergents. **H. STACHE.** Manufacturing Confectioners Company or in ''Tenside-Taschenbuch. Carl Hauser Verlag, 1981
- International Buyers Guide. CFTA Publications, 1992
- OPD 1993 Chemicals Buyers Directory. Schnell Publishing Co, 1993
- *Journal of the Society of Cosmetic Chemists,* 1955, vol. 6 (2), 80
- **DARTOIS et al.** *Biochemica et Biophysica Acta,* 1993, vol. 1131, 253-360